# FASCICULE DE BREVET EUROPEEN

(11) **EP 3 558 706 B1**
(45) Date de publication et mention de la délivrance du brevet: **16.06.2021**
(21) Numéro de dépôt: 17832262.4
(22) Date de dépôt: 21.12.2017
(51) Int. Cl.: B60C 1/00, C08L 15/00

(54) **COMPOSITION DE CAOUTCHOUC AVEC UNE BONNE DISPERSION DE QUANTITES ELEVEES DE CHARGE INORGANIQUE RENFORÇANTE**
KAUTSCHUKZUSAMMENSETZUNG MIT GUTER DISPERSION VON GRÖSSEREN MENGEN AN VERSTÄRKENDEM ORGANISCH FÜLLSTOFF
RUBBER COMPOSITION HAVING A GOOD DISPERSION OF HIGH AMOUNTS OF REINFORCING INORGANIC FILLER

(30) Priorité: 22.12.2016 FR 1663212
(43) Date de publication de la demande: 30.10.2019
(73) Titulaire: Compagnie Générale des Etablissements Michelin, 63000 Clermont-Ferrand (FR)
(72) Inventeur: DRONET, Séverin, 63040 Clermont-Ferrand cedex 9 (FR); PETITJEAN, Laurent, 63040 Clermont-Ferrand cedex 9 (FR); COUTY, Marc, 63040 Clermont-Ferrand cedex 9 (FR); PAVAGEAU, Corentin, 63040 Clermont-Ferrand cedex 9 (FR)
(74) Mandataire: Le Cam, Véronique Marie Christine
(86) Numéro de dépôt international: PCT/FR2017/053763
(87) Numéro de publication internationale: WO 2018/115761

(56) Documents cités:
- WO-A1-2015/091929
- FR-A1- 2 939 076
- FR-A1- 3 014 443

## Description

La présente invention est relative à une composition de caoutchouc utilisable notamment pour la fabrication de matériau de pneumatiques, permettant la bonne dispersion de quantités élevées de charge inorganique renforçante, comprenant un coupage d'un élastomère diénique de faible masse moléculaire fonctionnalisé en bout de chaîne par une fonction apte à réagir avec la surface de la silice, en particulier une fonction SiOR, R désignant un atome d'hydrogène ou un groupe hydrocarboné, ou un bloc polysiloxane ayant une extrémité silanol et d'un élastomère diénique de masse moléculaire plus élevée.

Pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées au moins partiellement de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé. Cependant, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation de polymères modifiés avec du noir de carbone comme charge renforçante dans le but d'obtenir une bonne interaction entre le polymère modifié et le noir de carbone. A titre d'exemples illustratifs de cet art antérieur, nous pouvons citer le brevet US- B- 3 135 716 qui décrit la réaction de polymères diéniques vivants en fin de chaîne avec un agent de couplage organique polyfonctionnel pour obtenir des polymères aux propriétés améliorées et le brevet US-B-3 244 664 qui décrit à titre d'agent de couplage ou d'étoilage de polymères diéniques des tétra-alcoxysilanes.

Dans le cadre des mélanges contenant une charge inorganique renforçante, il a été proposé d'utiliser des copolymères diéniques fonctionnalisés par des groupements silanol.

On peut citer les brevets FR-2 951 178 B1 et EP-778 311 B1 qui décrivent l'utilisation de polymères diéniques fonctionnalisés par un groupement silanol en extrémité de chaîne. Dans le brevet FR-2 951 178 B1, les polymères fonctionnels sont décrits comme associés à des polymères étoilés à l'aide de composés à base d'étain. Plus récemment, la demande de brevet WO-2009/077837A1 décrit des élastomères fonctionnalisés par un groupement silanol à une extrémité de chaîne et par un groupement aminé à l'autre extrémité de chaîne ou la demande WO-2016/001372 décrit des élastomères fonctionnalisés par un groupement silanol à une extrémité de chaîne, présentant un indice de polymolécularité avant fonctionnalisation inférieur ou égal à 1,6, associés à un élastomère diénique étoilé.

Cependant, on cherche encore à améliorer la dispersion de la silice et à réduire la rigidité malgré une quantité de silice importante.

L'invention se rapporte à une composition de caoutchouc à base d'au moins
- Une matrice élastomérique comprenant
   i. Un premier élastomère diénique ayant une masse moléculaire en nombre, Mn, supérieure ou égale à 100 000 g/mol
   ii. Un deuxième élastomère diénique fonctionnalisé portant en extrémité de chaîne une fonction apte à réagir avec la surface de la silice, ledit élastomère diénique fonctionnalisé a une masse moléculaire en nombre, Mn, inférieure ou égale à 80 000 g/mol
- Une charge inorganique renforçante, en une quantité allant de 55 pce à 200 pce.

En outre, la quantité en charge inorganique renforçante varie avantageusement de 20% à 40% en volume, par rapport au volume de la composition de caoutchouc.

La proportion en ledit deuxième élastomère diénique fonctionnalisé varie avantageusement de 50% à 95% en poids, par rapport au poids total dudit premier élastomère diénique et dudit deuxième élastomère diénique fonctionnalisé. En particulier, la fraction pondérale dudit premier élastomère diénique dans la matrice élastomérique est inférieure ou égale à 50% en poids, plus particulièrement elle varie de 5% à 50% en poids. En particulier, la fraction pondérale dudit deuxième élastomère diénique fonctionnalisé dans la matrice élastomérique est supérieure ou égale à 50% en poids, plus particulièrement elle varie de 50% à 95% en poids.

Avantageusement, ledit premier élastomère diénique a une masse moléculaire en nombre, Mn, allant de 100 000 g/mol à 600 000 g/mol. Ledit premier élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Avantageusement, ledit deuxième élastomère diénique fonctionnalisé a une masse moléculaire en nombre, Mn, allant de 20 000 g/mol à 80 000 g/mol. Ledit deuxième élastomère diénique fonctionnalisé est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Dans ledit deuxième élastomère diénique fonctionnalisé, la fonction apte à réagir avec la surface de la silice est avantageusement une fonction SiOR, R désignant un atome d'hydrogène ou un groupe hydrocarboné, ou un bloc polysiloxane ayant une extrémité silanol.

Le bloc polysiloxane ayant une extrémité silanol répond avantageusement à la formule :

[-(SiR₁R₂O)ₓ-H]

dans laquelle :
R₁ et R₂, identiques ou différents, représentent un groupe alkyle, cycloalkyle, aryle, alkaryle, vinyle ayant de 1 à 10 atomes de carbone, en particulier R₁ et R₂, identiques ou différents, représentent un groupe alkyle ayant de 1 à 10 atomes de carbone, de préférence le radical méthyle ;
x est un nombre entier allant de 1 à 1500.

Dans la composition de caoutchouc, la teneur en charge inorganique renforçante va avantageusement de 55 pce à 170 pce. En outre, la quantité en charge inorganique renforçante varie plus avantageusement de 20% à 30% en volume, par rapport au volume de la composition de caoutchouc.

La charge inorganique renforçante est avantageusement de la silice ou un noir de carbone recouvert de silice, de préférence de la silice.

La charge inorganique renforçante constitue avantageusement la totalité de la charge renforçante.

La silice est avantageusement une silice de surface spécifique BET comprise entre 30 à 400 m²/g, avantageusement entre 40 et 300m²/g, avantageusement entre 60 et 250m²/g.

Les compositions selon l'invention permettent :
- De disperser plus finement la silice que dans des compositions comprenant uniquement des élastomères diéniques fonctionnels de grandes masses molaires, et de sortir du compromis usuel de renforcement d'un mélange par la silice.
- D'incorporer des quantités importantes de silice dans la composition.
- De réduire la rigidité du matériau à iso taux de charge par rapport à des compositions comprenant uniquement des élastomères diéniques fonctionnels de grandes masses molaires.
- D'améliorer l'allongement rupture par rapport à des compositions comprenant uniquement des élastomères diéniques fonctionnels de grandes masses molaires.

L'invention se rapporte aussi à un article fini ou semi-fini comportant une composition de caoutchouc selon l'invention.

L'invention se rapporte également à une bande de roulement de pneumatique comportant une composition de caoutchouc selon l'invention.

L'invention se rapporte aussi à un pneumatique ou produit semi-fini comportant une composition de caoutchouc selon l'invention.

### I- Description détaillée de l'invention

Dans la présente description, sauf indication expresse différente, tous les pourcentages (%) indiqués sont des % en masse.

D'autre part, tout intervalle de valeurs désigné par l'expression "entre a et b " représente le domaine de valeurs allant de plus de a à moins de b (c'est-à-dire bornes a et b exclues) tandis que tout intervalle de valeurs désigné par l'expression " de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Les composés mentionnés dans la description et entrant dans la préparation de polymères ou de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

### I-1. Elastomère diénique :

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux- ci contiennent de 20 % à 99 % en poids d'unités diéniques, et de 1 à 80 % en poids d'unités vinylaromatique.

A titre de diènes conjugués utilisables dans le procédé conforme à l'invention conviennent notamment le butadiène- 1 ,3 , le 2- méthyl- 1 ,3 -butadiène, les 2,3 di(alcoyle en C i à C5)- 1 ,3 -butadiène tels que par exemple le 2,3 -diméthyl- 1 ,3 -butadiène, 2, 3 -diéthyl- 1 ,3 - butadiène, 2-méthyl-3 -éthyl- 1 ,3 -butadiène, le 2-méthyl-3 -isopropyl- 1 ,3 -butadiène, le phényl- 1 ,3 -butadiène, le 1 ,3 -pentadiène et le 2,4 hexadiène, etc.

A titre de composés vinylaromatiques conviennent notamment le styrène, l'ortho-, méta, para-méthylstyrène, le mélange commercial "vinyltoluène" , le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), le caoutchouc naturel, les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène- styrène (SIR) et des copolymères d'isoprène-butadiène-styrène (SBIR). Parmi ces copolymères, les copolymères de butadiène-styrène (SBR) sont particulièrement préférés.

L'élastomère diénique peut avoir toute microstructure qui est fonction des conditions de polymérisation utilisées. L'élastomère peut être à blocs, statistique, séquencé, microséquencé, etc... et être préparé en dispersion ou en solution.

Dans la composition selon l'invention, on utilise au moins deux élastomères.

Le premier élastomère a une masse moléculaire en nombre, Mn, supérieure ou égale à 100 000 g/mol, avantageusement allant de 100 000 g/mol à 600 000 g/mol, plus avantageusement allant de 140 000 g/mol à 500 000 g/mol.

L'indice de polymolécularité est avantageusement inférieur à 4.

Ledit premier élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène. Le deuxième élastomère a une masse moléculaire en nombre, Mn, inférieure ou égale à 80 000 g/mol, avantageusement allant de 20 000 g/mol à 80 000 g/mol.

L'indice de polymolécularité est avantageusement inférieur à 2.

Il est entendu que le premier élastomère peut être constitué par un mélange d'élastomères qui se différencient les uns des autres de par leur microstructure ou leur macrostructure.

Ledit deuxième élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Ce deuxième élastomère diénique est fonctionnalisé portant en extrémité de chaîne une fonction apte à réagir avec la surface de la silice, en particulier une fonction SiOR, R désignant un atome d'hydrogène ou un groupe hydrocarboné, ou un bloc polysiloxane ayant une extrémité silanol.

Le deuxième élastomère diénique peut être un polymère linéaire ou étoilé, voire branché.

Selon un mode de réalisation préférentiel de l'invention, le deuxième élastomère diénique est majoritairement sous une forme linéaire, c'est-à-dire que s'il comporte des chaînes étoilées ou branchées, celles-ci représentent une fraction pondérale minoritaire dans cet élastomère.

Selon un mode de réalisation particulièrement préférentiel, le deuxième élastomère diénique est porteur d'au moins une fonction dite « silanol » de formule SiOH (R est alors un atome d'hydrogène).

Des élastomères diéniques correspondant à une telle définition sont bien connus, ils ont par exemple été décrits dans les documents EP-0 778 311 B1, WO-2011/042507 A1, WO-2006/050486 A1, WO-2009/077837 A1 ou EP-0 877 047 B1. La fonction silanol SiOH est située en extrémité de chaîne de l'élastomère diénique, en particulier sous la forme d'un groupement diméthylsilanol -Me₂SiOH.

Selon un mode de réalisation particulier de l'invention, la fonction silanol peut être liée à un polysiloxane, comme par exemple décrit dans le brevet EP-0 778 311 B1.

Le bloc polysiloxane ayant une extrémité silanol répond avantageusement à la formule générale (I) suivante :

(I) [-(SiR₁R₂O)ₓ-H]

dans laquelle :
R₁ et R₂, identiques ou différents, représentent un groupe alkyle, cycloalkyle, aryle, alkaryle, vinyle ayant de 1 à 10 atomes de carbone ;
x est un nombre entier allant de 1 à 1500.

Avantageusement, R₁ et R₂, identiques ou différents, représentent un groupe alkyle ayant de 1 à 10 atomes de carbone. De préférence R₁ et R₂ représentent chacun un radical méthyle.

Selon un autre mode de réalisation de l'invention, le deuxième élastomère diénique est porteur d'au moins une fonction de formule SiOR dans laquelle R est un radical hydrocarboné.

Des élastomères diéniques correspondant à une telle définition sont également bien connus, ils ont par exemple été décrits dans les documents JP-63-215701, JP-62-227908, US-5 409 969 ou WO-2006/050486.

Dans un mode de réalisation, l'élastomère diénique fonctionnalisé portant une fonction apte à réagir avec la surface de la silice est mono fonctionnel. En d'autres termes, l'élastomère diénique est fonctionnalisé en une seule extrémité de chaîne. L'autre extrémité de chaîne est libre et ne porte aucune fonction.

Dans un autre mode de réalisation, le deuxième élastomère diénique, porteur d'au moins une fonction apte à réagir avec la surface de la silice, est également porteur d'au moins une autre fonction qui est différente de la fonction SiOR ou du bloc polysiloxane. Cette autre fonction est généralement apportée par l'initiateur de polymérisation. Selon un mode de réalisation préférentiel, cette autre fonction portée par le deuxième élastomère diénique est une fonction amine.

Plus particulièrement selon un mode de réalisation, la fonction amine peut être présente sur une extrémité de chaîne qui ne porte pas la fonction SiOR ou le bloc polysiloxane. Une telle configuration peut être réalisée par exemple par l'emploi d'un amorceur portant une fonction amine, en particulier par l'utilisation d'un amorceur qui est un amidure de lithium, tel que l'amidure de lithium de la pyrrolidine ou de l'hexaméthylèneimine, ou un organolithien portant une fonction amine tel que le diméthylaminopropyllithium et le 3-pyrrolidinopropyllithium. De tels amorceurs ont été décrits par exemple dans les brevets EP-0 590 490 B1 et EP-0 626 278 B1. De tels élastomères portant une fonction SiOR et une fonction amine à leurs extrémités de chaîne différentes ont par exemple été décrits dans les brevets EP-0 778 311 B1, WO-2009/077837 A1 et US-5 508 333.

Il est entendu que le deuxième élastomère peut être constitué par un mélange d'élastomères qui se différencient les uns des autres de par la nature chimique de la fonction terminale, par leur microstructure ou encore par leur macrostructure.

La proportion en ledit deuxième élastomère diénique fonctionnalisé varie avantageusement de 50% à 95% en poids, par rapport au poids total dudit premier élastomère diénique et dudit deuxième élastomère diénique fonctionnalisé.

En particulier, la fraction pondérale dudit premier élastomère diénique dans la matrice élastomérique est inférieure ou égale à 50% en poids, plus particulièrement elle varie de 5% à 50% en poids, avantageusement inférieure ou égale à 30% en poids, en particulier de 10% à 30% en poids.

En particulier, la fraction pondérale dudit deuxième élastomère diénique fonctionnalisé dans la matrice élastomérique est supérieure ou égale à 50% en poids, plus particulièrement elle varie de 50% à 95% en poids, avantageusement supérieure ou égale à 70% en poids, en particulier de 70% à 90% en poids.

Avantageusement, la matrice élastomère comprend plus de 50%, préférentiellement plus de 70%, en masse dudit deuxième élastomère diénique fonctionnalisé, le complément à 100% étant constitué par ledit premier élastomère diénique.

### I-2. Charge renforçante

Par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant pour être utilisée à titre de charge renforçante l'emploi d'un agent ou système de couplage destiné à assurer une liaison chimique stable entre l'élastomère diénique et ladite charge.

Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non.

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après. Comme charges inorganiques conviennent notamment des charges minérales du type siliceuse, en particulier de la silice (SiO₂), ou du type alumineuse, en particulier de l'alumine (Al₂O₃). La silice utilisée peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Evonik, les silices Zeosil 1200MP, 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO-03/16837.

Lorsque les compositions de l'invention sont destinées à des bandes de roulement de pneumatique à faible résistance au roulement, la charge inorganique utilisée, en particulier s'il s'agit de silice, a de préférence une surface BET comprise entre 30 et 400 m²/g, avantageusement entre 40 et 300m²/g, avantageusement entre 60 et 250m²/g.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer les documents brevet WO-96/37547, WO-99/28380.

La teneur en charge inorganique renforçante va de 55 pce à 200 pce, avantageusement de 55 pce à 170 pce. En outre, la quantité en charge inorganique renforçante varie avantageusement de 20% à 40% en volume, par rapport au volume de la composition de caoutchouc, plus avantageusement de 20% à 30% en volume.

Les compositions de l'invention peuvent ainsi être qualifiées de compositions à haute teneur en charge inorganique renforçante, en particulier en silice.

Avantageusement, la charge inorganique renforçante constitue la totalité de la charge renforçante.

Selon une variante de l'invention, lorsque du noir de carbone peut également être présent, il peut être utilisé à un taux inférieur à 20 pce, plus avantageusement inférieur à 10pce, par exemple entre 0,5 et 20 pce, notamment de 1 à 10 pce.

Pour coupler la charge inorganique renforçante à l'élastomère diénique, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels. On utilise notamment des silanes polysulfurés, dits "symétriques" ou "asymétriques", les silanes porteurs d'au moins une fonction thiol (-SH) (dits mercaptosilanes) et/ou d'au moins une fonction thiol bloqué. Bien entendu pourraient être également utilisés des mélanges des agents de couplage précédemment décrits, comme décrit notamment dans la demande WO-2006/125534.

Toutefois, de par la présence du deuxième élastomère diénique fonctionnalisé, l'utilisation d'un agent de couplage n'est qu'optionnelle.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de silice. Son taux est préférentiellement compris entre 0,5 et 15 pce, plus préférentiellement entre 3 et 12 pce. Ce taux est aisément ajusté par l'homme du métier selon le taux de silice utilisé dans la composition.

A titre d'agent de recouvrement, on considérera généralement des agents d'aide à la mise en œuvre susceptibles de manière connue, grâce à une amélioration de la dispersion de la charge inorganique dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des aminés primaires, secondaires ou tertiaires (par exemple des trialcanol-amines), des POS hydroxylés ou hydrolysables, par exemple des α,ω- dihydroxy-polyorganosiloxanes (notamment des α,ω-dihydroxy-polydiméthylsiloxanes), des acides gras comme par exemple l'acide stéarique. A titre d'agent de recouvrement, on considérera également des dérivés guanidiques, en particulier diphénylguanidine.

### 1-3. Additifs divers

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des résines plastifiantes, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO-02/10269, un système de réticulation à base soit de soufre, soit de donneurs de soufre et/ou de peroxyde et/ou de bismaléimides, des accélérateurs de vulcanisation.

### I-4. Préparation des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 20°C et 100°C, phase de finition au cours de laquelle est incorporé le système de réticulation ou vulcanisation.

Selon un mode de réalisation de l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en au moins trois étapes thermomécaniques au cours desquelles on introduit, dans un mélangeur approprié tel qu'un mélangeur interne usuel, tous les constituants nécessaires, les éventuels agents de recouvrement ou de mise en œuvre complémentaires et autres additifs divers, à l'exception du système de vulcanisation. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2- benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2- benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

L'invention se rapporte aussi à un article fini ou semi-fini comportant une composition de caoutchouc selon l'invention.

L'invention se rapporte également à une bande de roulement de pneumatique comportant une composition de caoutchouc selon l'invention.

L'invention se rapporte aussi à un pneumatique ou produit semi-fini comportant une composition de caoutchouc selon l'invention.

### III- EXEMPLES DE REALISATION DE L'INVENTION

### Mesures et tests utilisés

### Propriétés dynamiques :

Les propriétés dynamiques G', G" et tan(δ) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99.

On effectue un balayage en amplitude de déformation de 0,1% à 100% crête-crête (cycle aller), puis de 100% à 0,1% crête-crête (cycle retour). Les résultats exploités sont le module de conservation de cisaillement dynamique (G'), le module de perte (G") et le facteur de perte tan(δ).

### Grandes déformations :

Les essais de traction à grandes déformations permettent de déterminer les contraintes d'élasticité et les propriétés à la rupture des matériaux. Sauf indication différente, ils sont effectués conformément à la norme française NF T 46-002 de septembre 1988. Les mesures de traction pour déterminer contraintes et allongements sont effectuées à la température de 23°C +/-2°C dans les conditions normales d'hygrométrie (50 +/- 5% d'humidité relative). A partir des mesures de contraintes et allongement, on calcule les modules sécants dits "nominaux" (ou contraintes apparentes, en MPa) à 10% d'allongement ("MA10"), à 100% d'allongement ("MA100") et à 300% d'allongement ("MA300").

### Caractérisation des polymères :

### a. Masse molaire des élastomères

Elle est déterminée par Chromatographie d'exclusion stérique triple détection (SEC3D)

### i) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polymolécularité (Ip = Mw/Mn) peuvent également être calculées.

### ii) Préparation du polymère:

Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine) à une concentration d'environ 1 g/L. Puis la solution est filtrée sur filtre de porosité 0.45µm avant injection.

### iii) Analyse SEC3D:

L'appareillage utilisé est un chromatographe « WATERS Alliance ». Le solvant d'élution est du (tétrahydrofuranne + 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».

Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».

### b. Microstructure des élastomères par RMN

Les déterminations des taux des différentes unités monomères et de leurs microstructures au sein du copolymère sont réalisées par une analyse RMN. Les spectres sont acquis sur 10 un spectromètre 500 MHz BRUKER équipé d'une sonde " Broad Band " BBIz-grad 5 mm. L'expérience RMN ¹H quantitative, utilise une séquence simple impulsion 30° et un délai de répétition de 5 secondes entre chaque acquisition. Les échantillons sont solubilisés dans le CDCl₃.

Les différents élastomères fonctionnels sont synthétisés selon le procédé décrit dans la demande EP-0 778 311.

Polymère I1, selon l'invention : SBR fonctionnel silanol en extrémité de chaîne selon l'invention, Mn = 35 000 g/mol

**Tableau 1**

| | Mn (g/mol) | Mw (g/mol) | Ip | Taux de fonctions (CH₃)₂Si (méq/kg) | % mass PB 1,2 | % mass Styrène |
|---|---|---|---|---|---|---|
| I1 | 35000 | 71700 | 2,05 | 30,4 | 18,3 | 27,7 |

Polymère I2, selon l'invention : SBR non fonctionnalisé, Mn = 241 600 g/mol

**Tableau 2**

| | Mn (g/mol) | Mw (g/mol) | Ip | Taux de fonctions (CH₃)₂Si (méq/kg) | % mass PB 1,2 | % mass Styrène |
|---|---|---|---|---|---|---|
| I2 | 241600 | 456600 | 1,89 | 0 | 18,7 | 26,8 |

Polymère X1 (comparatif) : SBR fonctionnel silanol en extrémité de chaîne selon l'invention, Mn = 150 000 g/mol

**Tableau 3**

| | Mn (g/mol) | Mw (g/mol) | Ip | Taux de fonctions (CH₃)₂Si (méq/kg) | % mass PB 1,2 | % mass Styrène |
|---|---|---|---|---|---|---|
| X1 | 180 000 | 324 000 | 1,8 | 6 | 17,8 | 26,0 |

### Exemple 1

On compare les compositions reportées dans le tableau 1 ci- après. Les compositions C1, C2 et C3 sont conformes à l'invention. Les compositions T1, T2 et T3 sont des compositions comparatives non-conformes à l'invention. A noter que les compositions T2 et T3, comprenant respectivement 133 et 178 pce de silice (soit 35 et 40% en volume), n'ont pas pu être fabriquées : le mélange n'a aucune cohésion, c'est une poudre non utilisable en sortie du mélangeur interne.

Les formulations sont exprimées en pourcentage en poids pour 100 parties en poids d'élastomère (pce).

**Tableau 4**

| | T1 | T2 | T3 | C1 | C2 | C3 |
|---|---|---|---|---|---|---|
| X1 | 100 | 100 | 100 | 0 | 0 | 0 |
| I1 | 0 | 0 | 0 | 80 | 80 | 80 |
| I2 | 0 | 0 | 0 | 20 | 20 | 20 |
| Silice (1) | 103 | 133 | 178 | 103 | 133 | 178 |
| DPG (2) | 1,6 | 2,09 | 2,63 | 1,6 | 2,09 | 2,63 |
| Agent de recouvrement (3) | 8,2 | 10,6 | 13,5 | 8,2 | 10,6 | 13,5 |
| Soufre | 1 | 1 | 1 | 1 | 1 | 1 |
| Accélérateur (4) | 1,5 | 1,5 | 1,5 | 1,5 | 1,5 | 1,5 |

| | | | | | | |
|---|---|---|---|---|---|---|
| (1) Silice de précipitation 160MP (ZEOSIL 1165MP), fabriquée par Solvay, type « HDS » de surface spécifique BET mesurée à 160m²/g, (2) DPG = diphénylguanidine ("perkacit" DPG de la société Flexsys) (3) octyltriéthoxysilane (silane "Octeo" de la société Degussa) ; (4) N-cyclohexyl-2-benzothiazyl-sulfénamide ("Santocure CBS" de la société Flexsys) | | | | | | |

Chacune des compositions est réalisée, dans un premier temps, par un travail thermo-mécanique, puis, dans un second temps de finition, par un travail mécanique.

On décrit en détail la marche de mélangeage pour les compositions C1 / T1 :
On introduit dans un mélangeur interne de laboratoire de type « Banbury », dont la capacité est de 402 cm³, qui est rempli à 70 % et dont la température initiale est de 110 °C, trois cinquièmes de la matrice élastomérique, la moitié de la silice, la moitié du DPG.

La matrice élastomérique est constituée de l'élastomère X1 ou du coupage d'élastomères I1 et I2.

Le travail thermo-mécanique est réalisé au moyen de palettes de type « Banbury ».

Après une minute, on introduit le quatrième cinquième de la matrice élastomérique, un quart de la silice, et un quart du DPG. La vitesse des palettes est augmentée pour arriver à 140°C à 2 min.

A 2 minutes, on introduit le dernier cinquième de la matrice élastomérique, le dernier quart de la silice, et le dernier quart du DPG toujours sous travail thermo-mécanique. La vitesse des palettes est réduite pour arriver à 150°C à 3 min.

A 3 minutes, le pilon est relevé pendant 5 secondes et la vitesse des palettes est réduite pour maintenir un plateau à 150°C.

A 4 minutes, l'agent de recouvrement ou de couplage est introduit et la vitesse des palettes est augmentée pour arriver à 160°C à 5 min.

Le travail thermo-mécanique est encore conduit pendant une minute, en ajustant la vitesse des palettes pour maintenir une température maximale de tombée de 165°C environ.

Pour les compositions C2 / T2, la matrice élastomérique, la silice et le DPG sont introduits en quatre ajouts.

Pour la composition C3 / T3, la matrice élastomérique, la silice et le DPG sont introduits en cinq ajouts.

On récupère le mélange ainsi obtenu (sauf pour les compositions T2 ou T3 pour lesquelles on n'obtient pas de mélange cohérent), on le refroidit puis, dans un mélangeur externe (homo-finisseur), on ajoute le soufre à 30° C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

### Propriétés des mélanges en déformation :

**Tableau 5**

| | T1 | C1 | C2 | C3 |
|---|---|---|---|---|
| G' 10% Retour | 5,74 | 5,23 | 5,52 | 8,55 |
| Tan(δ) - 10% Retour | 0,27 | 0,29 | 0,34 | 0.,38 |

Le mélange C1 présente une diminution de la rigidité (G' 10% retour) de l'ordre de 10% alors que la dissipation (tand 10% retour) n'augmente que de 7% par rapport à un mélange T1.

Des résultats similaires sont obtenus pour les compositions C2 et C3.

### Grandes déformations :

**Tableau 6**

| | T1 | C1 | C2 | C3 |
|---|---|---|---|---|
| Déformation rupture moyenne (%)* | 532 | 722 | 605 | 463 |
| MA10 | 14,0 | 14,6 | 18,8 | 23,1 |
| MA100 | 3,2 | 2,4 | 3,1 | 4,2 |
| MA300 | 4,2 | 2,1 | 2,8 | 3,7 |

| | | | | |
|---|---|---|---|---|
| * Déformation rupture moyenne calculée sur 3 éprouvettes. | | | | |

Les essais de traction à grandes déformations permettent de déterminer les contraintes d'élasticité et les propriétés à la rupture des matériaux. Ces valeurs sont représentatives de la rigidité: plus la valeur des modules est élevée, plus la rigidité est élevée.

Le mélange C1 est moins rigide à 23°C et présente un allongement à la rupture supérieur d'environ 200% par rapport au mélange T1.

### Exemple 2 : dispersion de la silice

Le mélange cru de la composition selon l'invention C1, ayant la composition décrite à l'exemple 1, est solubilisé dans un bon solvant de la matrice elastomère, par exemple du toluène ou du tetrahydrofurane, par agitation pendant 24h à une concentration de 1wt%. Cette solution est ensuite déposée sur une grille de microscopie éléctronique recouverte de formvar d'un côté et de carbone de l'autre. Les observations sont effectuées sur un MET CM200 en mode TEM BF à différents grandissements avec prise de 10 clichés à 58kx pour analyse d'images.

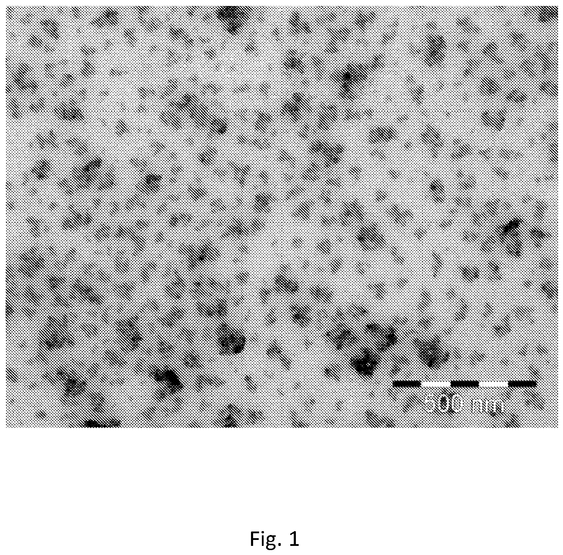

Un cliché représentatif est reproduit sur la figure 1.

### Exemple 3 : Effet du taux d'élastomère fonctionnel

On compare les compositions reportées dans le tableau 2 ci- après. Les compositions C4, C5 et C6 sont conformes à l'invention. On a fait varier le ratio massique entre les premier et deuxième élastomères selon l'invention. La composition T4 est une composition comparative non-conforme à l'invention.

Les formulations sont exprimées en pourcentage en poids pour 100 parties en poids d'élastomère (pce).

**Tableau 7**

| | T4 | C4 | C5 | C6 |
|---|---|---|---|---|
| X1 | 100 | 0 | 0 | 0 |
| I1 | 0 | 70 | 80 | 90 |
| I2 | 0 | 30 | 20 | 10 |
| Silice (1) | 111 | 111 | 111 | 111 |
| DPG (2) | 1,96 | 1,96 | 1,96 | 1,96 |
| Agent de recouvrement (3) | 8,2 | 8,2 | 10,6 | 13,5 |
| 6PPD (4) | 2 | 2 | 2 | 2 |
| ZnO | 3 | 3 | 3 | 3 |
| Acide Stéarique | 2 | 2 | 2 | 2 |
| Soufre | 1 | 1 | 1 | 1 |
| Accélérateur (5) | 1,5 | 1,5 | 1,5 | 1,5 |

| | | | | |
|---|---|---|---|---|
| (1) Silice de précipitation 160MP (ZEOSIL 1165MP), fabriquée par Solvay, type « HDS » de surface spécifique BET mesurée à 160m²/g, (2) DPG = diphénylguanidine ("perkacit" DPG de la société Flexsys) (3) octyltriéthoxysilane (silane "Octeo" de la société Degussa) ; (4) 6-PPD : N-1,3-diméthylbutyl-N-phénylparaphénylènediamine (5) N-cyclohexyl-2-benzothiazyl-sulfénamide ("Santocure CBS" de la société Flexsys) | | | | |

Chacune des compositions est réalisée, dans un premier temps, par un travail thermomécanique, puis, dans un second temps de finition, par un travail mécanique. La même marche de mélangeage que les compositions C1 / T1 décrite plus haut est utilisée.

### Propriétés des mélanges en déformation :

**Tableau 8**

| | T4 | C4 | C5 | C6 |
|---|---|---|---|---|
| G' 10% Retour | 4,63 | 3,93 | 3,53 | 3,26 |
| Tan(δ) - 10% Retour | 0,32 | 0,36 | 0,33 | 0,32 |

Le mélange C6 présente une diminution de la rigidité (G' 10% retour) de l'ordre de 30% alors que la dissipation (Tan(δ) 10% retour) n'augmente pas par rapport à un mélange T4.

Des résultats similaires sont obtenus pour les compositions C4 et C5.

### Grandes déformations :

**Tableau 9**

| | T4 | C4 | C5 | C6 |
|---|---|---|---|---|
| Déformation rupture moyenne (%) | 413 | 405 | 390 | 368 |
| MA10 | 10,75 | 9,38 | 7,73 | 7,60 |
| MA100 | 2,74 | 2,39 | 2,24 | 2,14 |
| MA300 | 3,88 | 4,71 | 4,59 | 4,57 |

Les essais de traction à grandes déformations permettent de déterminer les contraintes d'élasticité et les propriétés à la rupture des matériaux. Ces valeurs sont représentatives de la rigidité: plus la valeur des modules est élevée, plus la rigidité est élevée.

Les mélanges C4, C5, C6 sont moins rigides (MA10 et MA100) à 23°C et présentent un allongement à la rupture légèrement inférieur par rapport au mélange T3.

## Revendications

1. Composition de caoutchouc à base d'au moins :
- Une matrice élastomérique comprenant :
i. Un premier élastomère diénique ayant une masse moléculaire en nombre, Mn, supérieure ou égale à 100 000 g/mol ;
ii. Un deuxième élastomère diénique fonctionnalisé portant en extrémité de chaîne une fonction apte à réagir avec la surface de la silice, ledit élastomère diénique fonctionnalisé a une masse moléculaire en nombre, Mn, allant de 20 000 g/mol à 80 000 g/mol;
- Une charge inorganique renforçante, en une quantité allant de 55 pce à 200 pce.

2. Composition de caoutchouc selon la revendication précédente, dans laquelle la quantité en charge inorganique renforçante varie de 20% à 40% en volume, par rapport au volume de la composition de caoutchouc.

3. Composition de caoutchouc selon l'une quelconque des revendications précédentes, dans laquelle la fraction pondérale dudit premier élastomère diénique dans la matrice élastomérique est inférieure ou égale à 50% en poids.

4. Composition de caoutchouc selon l'une quelconque des revendications précédentes, dans laquelle la fraction pondérale dudit deuxième élastomère diénique fonctionnalisé dans la matrice élastomérique est supérieure ou égale à 50% en poids.

5. Composition de caoutchouc selon l'une quelconque des revendications précédentes, dans laquelle ledit premier élastomère diénique a une masse moléculaire en nombre, Mn, allant de 100 000 g/mol à 600 000 g/mol.

6. Composition de caoutchouc selon l'une quelconque des revendications précédentes, dans laquelle ledit premier élastomère diénique est un copolymère de butadiène-styrène.

7. Composition de caoutchouc selon l'une quelconque des revendications précédentes, dans laquelle ledit deuxième élastomère diénique fonctionnalisé est un copolymère de butadiène-styrène.

8. Composition de caoutchouc selon la revendication précédente, dans laquelle dans ledit deuxième élastomère diénique fonctionnalisé la fonction apte à réagir avec la surface de la silice est une fonction SiOR, R désignant un atome d'hydrogène ou un groupe hydrocarboné, ou un bloc polysiloxane ayant une extrémité silanol.

9. Composition de caoutchouc selon la revendication précédente, dans laquelle le bloc polysiloxane ayant une extrémité silanol répond à la formule :
[-(SiR₁R₂O)ₓ-H]
dans laquelle :
R₁ et R₂, identiques ou différents, représentent un groupe alkyle, cycloalkyle, aryle, alkaryle, vinyle ayant de 1 à 10 atomes de carbone ;
x est un nombre entier allant de 1 à 1500.

10. Composition de caoutchouc selon l'une quelconque des revendications précédentes, dans laquelle la charge inorganique renforçante est de la silice ou un noir de carbone recouvert de silice.

11. Composition de caoutchouc selon l'une quelconque des revendications précédentes, dans laquelle la charge inorganique renforçante constitue la totalité de la charge renforçante.

12. Article fini ou semi-fini comportant une composition de caoutchouc selon l'une quelconque des revendications précédentes.

13. Bande de roulement de pneumatique comportant une composition de caoutchouc selon l'une quelconque des revendications 1 à 11.

14. Pneumatique ou produit semi-fini comportant une composition de caoutchouc selon l'une quelconque des revendications 1 à 11.

## Patentansprüche

1. Kautschukzusammensetzung auf Basis von mindestens:
- einer Elastomermatrix, umfassend:
i. ein erstes Dienelastomer mit einem zahlenmittleren Molekulargewicht Mn größer oder gleich 100.000 g/mol;
ii. ein zweites funktionalisiertes Dienelastomer, das am Kettenende eine Funktion trägt, die mit der Oberfläche von Kieselsäure reagieren kann, wobei das funktionalisierte Dienelastomer ein zahlenmittleres Molekulargewicht Mn im Bereich von 20.000 g/mol bis 80.000 g/mol aufweist;
- einem verstärkenden anorganischen Füllstoff in einer Menge im Bereich von 55 phe bis 200 phe.

2. Kautschukzusammensetzung nach dem vorhergehenden Anspruch, wobei die Menge an verstärkendem anorganischem Füllstoff im Bereich von 20 bis 40 Vol.-%, bezogen auf das Volumen der Kautschukzusammensetzung, liegt.

3. Kautschukzusammensetzung nach einem der vorhergehenden Ansprüche, wobei der Gewichtsanteil des ersten Dienelastomers in der Elastomermatrix kleiner oder gleich 50 Gew.-% ist.

4. Kautschukzusammensetzung nach einem der vorhergehenden Ansprüche, wobei der Gewichtsanteil des zweiten funktionalisierten Dienelastomers in der Elastomermatrix größer oder gleich 50 Gew.-% ist.

5. Kautschukzusammensetzung nach einem der vorhergehenden Ansprüche, wobei das erste Dienelastomer ein zahlenmittleres Molekulargewicht Mn im Bereich von 100.000 g/mol bis 600.000 g/mol aufweist.

6. Kautschukzusammensetzung nach einem der vorhergehenden Ansprüche, wobei es sich bei dem ersten Dienelastomer um ein Butadien-Styrol-Copolymer handelt.

7. Kautschukzusammensetzung nach einem der vorhergehenden Ansprüche, wobei es sich bei dem zweiten funktionalisierten Dienelastomer um ein Butadien-Styrol-Copolymer handelt.

8. Kautschukzusammensetzung nach einem der vorhergehenden Ansprüche, wobei es sich in dem zweiten funktionalisierten Dienelastomer bei der Funktion, die mit der Oberfläche von Kieselsäure reagieren kann, um eine SiOR-Funktion, wobei R für ein Wasserstoffatom oder eine Kohlenwasserstoffgruppe steht, oder einem Polysilanblock mit einer Silanol-Endgruppe handelt.

9. Kautschukzusammensetzung nach einem der vorhergehenden Ansprüche, wobei der Polysilanblock mit einer Silanol-Endgruppe der Formel
[-(SiR₁R₂O)ₓ-H]
entspricht, wobei:
R₁ und R₂ gleich oder verschieden sind und für eine Alkyl-, Cycloalkyl-, Aryl-, Alkaryl- oder Vinylgruppe mit 1 bis 10 Kohlenstoffatomen stehen;
x für eine ganze Zahl im Bereich von 1 bis 1500 steht.

10. Kautschukzusammensetzung nach einem der vorhergehenden Ansprüche, wobei es sich bei dem verstärkenden anorganischen Füllstoff um Kieselsäure oder mit Kieselsäure bedeckten Ruß handelt.

11. Kautschukzusammensetzung nach einem der vorhergehenden Ansprüche, wobei der verstärkende anorganische Füllstoff den gesamten verstärkenden Füllstoff ausmacht.

12. Erzeugnis oder Halbzeug, umfassend eine Kautschukzusammensetzung nach einem der vorhergehenden Ansprüche.

13. Reifenlauffläche, umfassend eine Kautschukzusammensetzung nach einem der Ansprüche 1 bis 11.

14. Reifen oder Halbzeug, umfassend eine Kautschukzusammensetzung nach einem der Ansprüche 1 bis 11.

## Claims

1. Rubber composition based on at least:
- an elastomer matrix comprising:
i. a first diene elastomer having a number-average molecular weight, Mn, of greater than or equal to 100 000 g/mol;
ii. a functionalized second diene elastomer bearing at the chain end a function capable of reacting with the surface of silica, said functionalized diene elastomer having a number-average molecular weight, Mn, ranging from 20 000 g/mol to 80 000 g/mol;
- a reinforcing inorganic filler, in an amount ranging from 55 phr to 200 phr.

2. Rubber composition according to the preceding claim, in which the amount of reinforcing inorganic filler ranges from 20% to 40% by volume, relative to the volume of the rubber composition.

3. Rubber composition according to either one of the preceding claims, in which the weight fraction of said first diene elastomer in the elastomeric matrix is less than or equal to 50% by weight.

4. Rubber composition according to either one of the preceding claims, in which the weight fraction of said functionalized second diene elastomer in the elastomeric matrix is greater than or equal to 50% by weight.

5. Rubber composition according to any one of the preceding claims, in which said first diene elastomer has a number-average molecular weight, Mn, ranging from 100 000 g/mol to 600 000 g/mol.

6. Rubber composition according to any one of the preceding claims, in which said first diene elastomer is a butadiene/styrene copolymer.

7. Rubber composition according to any one of the preceding claims, in which said functionalized second diene elastomer is a butadiene/styrene copolymer.

8. Rubber composition according to any one of the preceding claims, in which, in said functionalized second diene elastomer, the function capable of reacting with the surface of silica is an SiOR function, R denoting a hydrogen atom or a hydrocarbon-based group, or a polysiloxane block having a silanol end.

9. Rubber composition according to the preceding claim, in which the polysiloxane block having a silanol end corresponds to the formula:
[-(SiR₁R₂O)ₓ-H]
wherein:
R₁ and R₂, which may be identical or different, represent an alkyl, cycloalkyl, aryl, alkaryl or vinyl group having from 1 to 10 carbon atoms;
x is an integer ranging from 1 to 1500.

10. Rubber composition according to any one of the preceding claims, in which the reinforcing inorganic filler is silica or a silica-covered carbon black.

11. Rubber composition according to any one of the preceding claims, in which the reinforcing inorganic filler constitutes all of the reinforcing filler.

12. Finished or semi-finished article comprising a rubber composition according to any one of the preceding claims.

13. Tyre tread comprising a rubber composition according to any one of Claims 1 to 11.

14. Tyre or semi-finished product comprising a rubber composition according to any one of Claims 1 to 11.
